(19) Europäisches Patentamt / European Patent Office / Office européen des brevets

(11) **EP 2 951 328 B1**

(12) **FASCICULE DE BREVET EUROPEEN**

(45) Date de publication et mention de la délivrance du brevet:
**09.10.2019 Bulletin 2019/41**

(21) Numéro de dépôt: **13706621.3**

(22) Date de dépôt: **01.02.2013**

(51) Int Cl.:
*C22C 38/00* *(2006.01)*    *B23K 35/30* *(2006.01)*
*C22C 19/03* *(2006.01)*

(86) Numéro de dépôt international:
**PCT/FR2013/050224**

(87) Numéro de publication internationale:
**WO 2014/118442 (07.08.2014 Gazette 2014/32)**

(54) **FIL DE SOUDURE POUR ALLIAGE FE-36NI**

SCHWEISSDRAHT FÜR FE-36NI-LEGIERUNG

WELDING WIRE FOR FE-36NI ALLOY

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(43) Date de publication de la demande:
**09.12.2015 Bulletin 2015/50**

(73) Titulaire: **Aperam**
**1882 Luxembourg (LU)**

(72) Inventeurs:
• **REYDET, Pierre-Louis**
**58130 Urzy (FR)**
• **ROY, Jean-Louis**
**F-95710 Chaussy (FR)**
• **PANIER, Roland, André**
**F-58000 Nevers (FR)**

(74) Mandataire: **Lavoix**
**2, place d'Estienne d'Orves**
**75441 Paris Cedex 09 (FR)**

(56) Documents cités:
**EP-A2- 0 482 889**    **WO-A1-2007/087785**
**DE-A1- 19 934 400**    **FR-A- 1 363 453**
**US-A1- 2008 277 398**

• **K. A Yushchenko ET AL: "Effect of alloying of the seam metal on the properties of weldments in invar alloys", Metal Science and Heat Treatment, 1 octobre 1974 (1974-10-01), pages 866-869, XP055086982, DOI: 10.1007/BF00664256 Extrait de l'Internet: URL:http://link.springer.com/content/pdf/10.1007/BF00664256.pdf**

• **José L Corbacho ET AL: "G rain Coarsening and Boundary Migration during Welding of Invar Fe-36Ni Alloy", MATERIALS CHARACTERIZATION, 1 janvier 1998 (1998-01-01), pages 27-34, XP055086979, Extrait de l'Internet: URL:http://www.sciencedirect.com/science/article/pii/S1044580398000205/pdfft?md5=afec8c18884e382f8eb6a29754d79cfe&pid=1-s2.0-S1044580398000205-main.pdf [extrait le 2013-11-06]**

**Description**

La présente invention concerne un fil de soudure destiné à être utilisé pour souder entre elles des parties de pièces, lesdites parties présentant la composition suivante, en % en poids :

$$35,0\% \leq Ni \leq 37,0\%$$
$$traces \leq C \leq 0,10\%$$
$$traces \leq Mn \leq 0,60\%$$
$$traces \leq P \leq 0,025\%$$
$$traces \leq S \leq 0,025\%$$
$$traces \leq Si \leq 0,35\%$$
$$traces \leq Cr \leq 0,50\%$$
$$traces \leq Mo \leq 0,50\%$$
$$traces \leq Co \leq 0,50\%$$

le reste étant constitué de fer et d'impuretés inévitables résultant de l'élaboration.

Cette composition correspond à la définition habituelle des alliages dits Fe-36Ni.

Les alliages Fe-36Ni, tels que l'Invar® M93, sont des alliages qui présentent un faible coefficient de dilatation thermique, ce qui les rend notamment très attractifs pour transporter des liquides cryogéniques.

Dans de telles applications, des éléments en alliage Fe-36Ni sont assemblés entre eux par soudure.

Lorsque les assemblages d'éléments en alliage Fe-36Ni sont utilisés dans des applications de récipients sous pression, tels que des tubes de transport de liquides cryogéniques ou des cuves destinées à recevoir des liquides cryogéniques, il est souhaitable que ces assemblages satisfassent aux critères exposés à la section IX consacrée aux qualifications pour les soudures et brasures de la norme intitulée « Code sur les chaudières et les appareils à pression » (« Boiler and Pressure Vessel Code » en anglais) émise par l'ASME (American Society of Mechanical Engineers).

Cette norme impose notamment que les propriétés mécaniques du joint soudé, en particulier la charge à la rupture (Rm), soient supérieures ou égales à celles du métal de base dans lequel sont réalisés les éléments assemblés par ce joint soudé de manière à ce que l'assemblage puisse être dimensionné sur la base des propriétés du métal de base, et non de celles du joint soudé.

Cette propriété est qualifiée par l'homme du métier par le terme anglais d' « overmatching » des propriétés mécaniques. On considère qu'il est satisfait à cette propriété si, lors d'un test de traction sur une éprouvette prélevée perpendiculairement au joint soudé, la rupture se produit dans le métal de base, et non dans le joint soudé.

Dans le cas présent, le métal de base est un alliage Fe-36Ni. Par conséquent, la condition d'overmatching des propriétés mécaniques sera remplie si le joint soudé présente des propriétés mécaniques supérieures ou égales à celles de l'alliage Fe-36Ni.

Une soudure présente en règle générale des grains de taille supérieure à ceux du métal de base, notamment du fait de leurs procédés d'obtention respectifs. Par conséquent, une soudure homogène, c'est-à-dire réalisée avec un fil de soudure de composition chimique identique à celle du métal de base ne satisfait pas, en principe, à la condition d'overmatching.

Afin d'améliorer les propriétés mécaniques de la soudure par rapport à une soudure homogène, on a envisagé de durcir l'alliage constituant le fil de soudure par addition d'éléments d'alliage tels que le niobium, qui engendrent un durcissement de solution solide de l'alliage.

A titre d'exemple, on connaît des fils de soudure à base de fer comprenant 36% de nickel, 1,6% de niobium et 0,4% de manganèse. Dans ces fils de soudure, le niobium est ajouté pour son effet de durcissement de solution solide et le manganèse pour piéger le soufre et améliorer la tenue à la crique de solidification et de réchauffage.

Cependant, les inventeurs de la présente invention ont constaté que de tels fils de soudure ne donnent pas entière satisfaction pour souder entre elles des pièces réalisées en alliage Fe-36Ni.

En effet, les inventeurs ont constaté que l'ajout de niobium, tout en améliorant effectivement les propriétés mécaniques à température ambiante de la soudure réalisée entre des éléments en alliage Fe-36Ni, et en particulier sa résistance à la traction, dégradait d'autres propriétés de la soudure. En particulier, les soudures ainsi obtenues sont fragiles. Ainsi, des expériences réalisées par les inventeurs ont montré que de telles soudures présentent une ductilité à -196°C, mesurée par choc (KCV), inférieure de 80% à celle du métal de base.

Par ailleurs, les inventeurs ont également constaté que ces joints soudés sont plus sensibles à la transformation martensitique lorsqu'ils sont déformés que le métal de base. Or, la présence d'îlots de martensite dans un alliage fer-nickel accélère considérablement la vitesse de corrosion par piqûre. En outre, elle augmente son coefficient de dilatation à température cryogénique. Un joint soudé déformé à température cryogénique produirait alors des propriétés dégradées par rapport à celle du métal de base. Cette situation, qui est envisageable lors d'un incident, n'est, en particulier, pas acceptable dans le domaine des récipients sous pression, notamment ceux destinés au transport ou au stockage du gaz naturel liquéfié.

FR 1 363 453 décrit des matériaux pour soudure en vue de la production de soudures ayant de faibles caractéristiques de dilatation, et plus particulièrement des matériaux pour soudure contenant du nickel et du fer à titre d'éléments métalliques prédominants.

Un but de l'invention est de fournir un fil de soudure adapté pour réaliser des assemblages soudés en alliage Fe-36Ni qui satisfont à la condition d'overmatching des propriétés mécaniques de la soudure avec l'alliage Fe-36Ni, et qui présentent en outre une meilleure sûreté dans le cadre des applications de récipients sous pression.

A cet effet, l'invention a pour objet un fil de soudure tel que précité, lequel est réalisé dans un alliage comprenant, en poids :

$38{,}6\% \le \text{Ni+Co} \le 45{,}0\%$

$\text{traces} \le \text{Co} \le 0{,}50\%$

$2{,}25\% \le \text{Ti+Nb} \le 0{,}8667 \times (\text{Ni+Co}) - 31{,}20 \%$ si $38{,}6\% \le \text{Ni+Co} \le 40{,}33\%$

$2{,}25\% \le \text{Ti+Nb} \le 3{,}75\%$ si $40{,}33\% \le \text{Ni+Co} \le 41{,}4\%$

$0{,}4167 \times (\text{Ni+Co}) - 15{,}0 \% \le \text{Ti+Nb} \le 3{,}75\%$ si $41{,}4\% \le \text{Ni+Co} \le 45{,}0\%$

$\text{traces} \le \text{Nb} \le 0{,}50\%$

$0{,}01\% \le \text{Mn} \le 0{,}30\%$

$0{,}01\% \le \text{Si} \le 0{,}25\%$

$\text{traces} \le \text{C} \le 0{,}05\%$

$\text{traces} \le \text{Cr} \le 0{,}50\%$

le reste étant constitué de fer et d'impuretés inévitables résultant de l'élaboration.

Selon des modes de réalisation particuliers, le fil de soudure selon l'invention présente l'une ou plusieurs des caractéristiques des revendications 2 à 7, prise(s) isolément ou suivant toutes combinaisons techniquement possibles.

L'invention a également pour objet un procédé de fabrication d'un fil de soudure tel que précité selon la revendication 8.

Selon des modes de réalisation particuliers, le procédé de fabrication du fil de soudure selon l'invention présente l'une ou plusieurs des caractéristiques des revendications 9 à 12, prise(s) isolément ou suivant toutes combinaisons techniquement possibles.

L'invention a également pour objet un procédé de soudage selon les revendications 13 et 14.

L'invention a également pour objet un procédé de fabrication d'un tronçon de tube selon les revendications 15 et 16.

L'invention a également pour objet un procédé de fabrication d'un tube selon les revendications 17 et 18.

L'invention a également pour objet un procédé de fabrication d'une partie de cuve selon la revendication 19.

L'invention a également pour objet un assemblage soudé selon la revendication 20.

L'invention a également pour objet une partie de cuve selon la revendication 21. L'invention a également pour objet un tronçon de tube selon la revendication 22. L'invention a également pour objet un tube selon la revendication 23.

L'invention sera mieux comprise à la lecture de la description qui va suivre, donnée uniquement à titre d'exemple et faite en se référant aux dessins annexés, sur lesquels :

- la figure 1 est un graphique représentant la teneur en titane + niobium du fil de soudure selon l'invention en fonction de sa teneur en nickel + cobalt ;
- la figure 2 est une vue schématique en section d'un assemblage soudé selon l'invention ;
- la figure 3 est une vue schématique de dessus d'une tôle utilisée lors de la mise en oeuvre du procédé de fabrication d'un tronçon de tube ;
- la figure 4 est une vue schématique en perspective d'un tronçon de tube obtenu par le procédé de fabrication d'un tronçon de tube selon l'invention ; et
- la figure 5 est une vue schématique en perspective d'un tube obtenu par le procédé de fabrication d'un tube selon l'invention.

Le fil de soudure selon l'invention est destiné à être utilisé comme fil d'apport pour souder entre elles des parties de pièces réalisées dans un métal de base comprenant, en % en poids :

$35{,}0\% \le \text{Ni} \le 37{,}0\%$

$\text{traces} \le \text{C} \le 0{,}10\%$

$\text{traces} \le \text{Mn} \le 0{,}60\%$

$\text{traces} \le \text{P} \le 0{,}025\%$

$\text{traces} \le \text{S} \le 0{,}025\%$

traces ≤ Si ≤ 0,35%
traces ≤ Cr ≤ 0,50%
traces ≤ Mo ≤ 0,50%
traces ≤ Co ≤ 0,50%

le reste étant constitué de fer et d'impuretés inévitables résultant de l'élaboration.

Un tel alliage est un alliage Fe-36Ni. Il correspond à l'alliage 11 défini au tableau 1 de la norme ASTM A 333/A333M-99.

De manière préférée, le fil de soudure est utilisé pour souder entre elles des parties de pièces réalisées dans un métal de base comprenant, en % en poids :

| Ni | Mn | Si | Co | C | Cr | S | P | Mo | Fe |
|---|---|---|---|---|---|---|---|---|---|
| 35,7% à 36,4% | 0,31% à 0,42% | 0,15% à 0,25% | 0,01% à 0,25% | 0,02% à 0,04% | 0,02% à 0,15% | 0,0002% à 0,0015% | 0,0001% à 0,007% | 0,001% à 0,10% | Reste |

Le nom commercial de cet alliage est Invar® M93.

L'utilisation de ce fil de soudure ne conduit pas l'homme du métier à modifier les conditions habituelles de réalisation de la soudure.

Il doit être entendu que dans tout le texte par « parties de pièces » soudées entre elles, on comprend aussi bien le cas où ces parties soudées entre elles appartiennent à deux pièces initialement séparées que le cas où ces parties sont deux parties d'une même pièce repliée sur elle-même, par exemple les deux bords longitudinaux d'une tôle que l'on soude pour constituer un tube.

Dans la suite de la description, on entend par « liquide cryogénique » un gaz liquéfié conservé à l'état liquide à basse température, notamment inférieure à -150°C. Un tel liquide cryogénique est par exemple du méthane ou du gaz naturel liquéfié, du butane ou du propane liquide. Dans la suite de la description, on qualifie de température cryogénique la température d'ébullition d'un tel liquide cryogénique.

Le métal de base défini ci-dessus, que ce soit dans sa forme générale ou dans sa forme préférée, présente les propriétés suivantes.

A température cryogénique, en particulier à -196°C (température d'ébullition de l'azote), sa résilience est supérieure à 100J/cm$^2$, et en particulier supérieure à 120J/cm$^2$.

Il présente un faible coefficient moyen de dilatation thermique entre - 180°C et 0°C, qui est notamment de l'ordre de 1x10$^{-6}$/°C.

Sa teneur en martensite reste inférieure à 5% lorsque le métal est soumis à une déformation plastique de 25% par traction plane interrompue à température cryogénique, notamment à -196°C (température d'ébullition de l'azote).

Le fil de soudure selon l'invention est réalisé dans un alliage comprenant, en % en poids :

38,6% ≤ Ni+Co ≤ 45,0%
traces ≤ Co ≤ 0,50%
2,25% ≤ Ti+Nb ≤ 0,8667 x (Ni+Co) - 31,20% si 38,6% ≤ Ni+Co ≤ 40,33%
2,25% ≤ Ti+Nb ≤ 3,75% si 40,33% ≤ Ni+Co ≤ 41,4%
0,4167 x (Ni+Co) - 15,0% ≤ Ti+Nb ≤ 3,75% si 41,4% ≤ Ni+Co ≤ 45,0%
traces ≤ Nb ≤ 0,50%
0,01% ≤ Mn ≤ 0,30%
0,01% ≤ Si ≤ 0,25%
traces ≤ C ≤ 0,05%
traces ≤ Cr ≤ 0,50%

le reste étant constitué de fer et d'impuretés inévitables résultant de l'élaboration.

Lorsque le fil de soudure selon l'invention est utilisé comme fil d'apport pour souder entre elles des parties de pièces réalisées dans le métal de base tel que défini ci-dessus, que ce soit dans sa forme particulière ou dans sa forme générale, les soudures obtenues présentent les propriétés suivantes.

La résilience de la soudure à température cryogénique, notamment à la température d'ébullition de l'azote (-196°C) est supérieure à 120J/cm$^2$. Cette propriété est obtenue notamment grâce au fait que la teneur en niobium de l'alliage constituant le fil de soudure est inférieure ou égale à 0,50%. Cette résilience de la soudure est similaire à celle du métal de base.

Le coefficient moyen de dilatation thermique de la soudure entre -180°C et 0°C est inférieur à 7,5x10$^{-6}$/°C. Il

est donc de l'ordre de celui du métal de base. Cette propriété est obtenue grâce au fait que la teneur en titane + niobium de l'alliage constituant le fil de soudure est inférieure ou égale à 3,75%.

Les teneurs en cobalt, manganèse, silicium et chrome de l'alliage constituant le fil de soudure sont limitées afin de ne pas dégrader le coefficient moyen de dilatation thermique entre -180°C et 0°C au-delà de $7,5 \times 10^{-6}$/°C.

La soudure présente une stabilité à la transformation martensitique supérieure ou égale à celle du métal de base à température cryogénique (en particulier à -196°C), c'est-à-dire que sa teneur en martensite reste inférieure ou égale à 5% lorsque le joint soudé est soumis à une déformation de 25% par traction plane interrompue à température cryogénique, notamment à -196°C, selon le test de stabilité décrit par la suite. Cette bonne stabilité de la soudure à la transformation martensitique est obtenue grâce au fait que la teneur en titane + niobium du fil de soudure est inférieure ou égale à $0,8667 \times (Ni+Co) - 31,20\%$, avec $Co \leq 0,50\%$. Dans ce contexte, les inventeurs ont découvert, de manière surprenante, que la stabilité à la transformation martensitique de la soudure augmente lorsque la teneur en nickel + cobalt du fil de soudure augmente, à teneur en titane + niobium constante et avec $Co \leq 0,50\%$.

Les teneurs en manganèse et en carbone du fil de soudure participent également à l'amélioration de la stabilité de la soudure à la transformation martensitique.

La teneur en carbone du fil de soudure est limitée afin de limiter la précipitation des carbonitrures de Ti/Nb qui dégradent la résilience à température cryogénique.

Les propriétés mécaniques de la soudure, en particulier la charge à la rupture (Rm), sont supérieures à celles du métal de base à température ambiante (25°C). La soudure remplit donc la condition d'overmatching des propriétés mécaniques à température ambiante. Cette propriété est obtenue grâce au fait que la teneur en titane + niobium du fil de soudure est supérieure ou égale à 2,25% avec $Nb \leq 0,50\%$. Le titane et le niobium sont utilisés pour leurs propriétés de durcissement de solution solide

Les propriétés mécaniques de la soudure, en particulier la charge à la rupture (Rm) sont supérieures à celles du métal de base à température cryogénique. La soudure remplit donc la condition d'overmatching des propriétés mécaniques à température cryogénique. Cette propriété est obtenue grâce au fait que la teneur en titane + niobium du fil de soudure est supérieure ou égale à $0,4167 \times (Ni+Co) - 15,0\%$, avec $Co \leq 0,50\%$.

En particulier, les inventeurs ont constaté que, pour une teneur en titane + niobium donnée, l'augmentation de la teneur en nickel + cobalt du fil de soudure au-delà de la borne supérieure correspondant à la formule ci-dessus inversée de manière à exprimer la teneur en nickel+cobalt en fonction de la teneur en titane + niobium, c'est-à-dire au-

delà de $\dfrac{Ti + Nb + 15,0\%}{0,4167}$, avec $Co \leq 0,50\%$ dégrade les propriétés mécaniques de l'alliage à température cryogénique. Les propriétés mécaniques de la soudure à température cryogénique deviennent alors inférieures à celles du métal de base, et la condition d'overmatching à température cryogénique n'est plus respectée.

On notera que les teneurs en éléments d'alliage du fil de soudure selon l'invention tiennent compte de l'inévitable dilution du fil de soudure par mélange avec le métal de base fondu au niveau de la soudure. La dilution moyenne est en principe comprise entre 15% et 50% selon la technique de soudage utilisée.

Les trois plages de teneurs en titane + niobium en fonction de la teneur en nickel + cobalt de l'alliage constituant le fil de soudure selon l'invention définies précédemment dans la composition générale du fil de soudure résultent de la combinaison des conditions mentionnées ci-dessus.

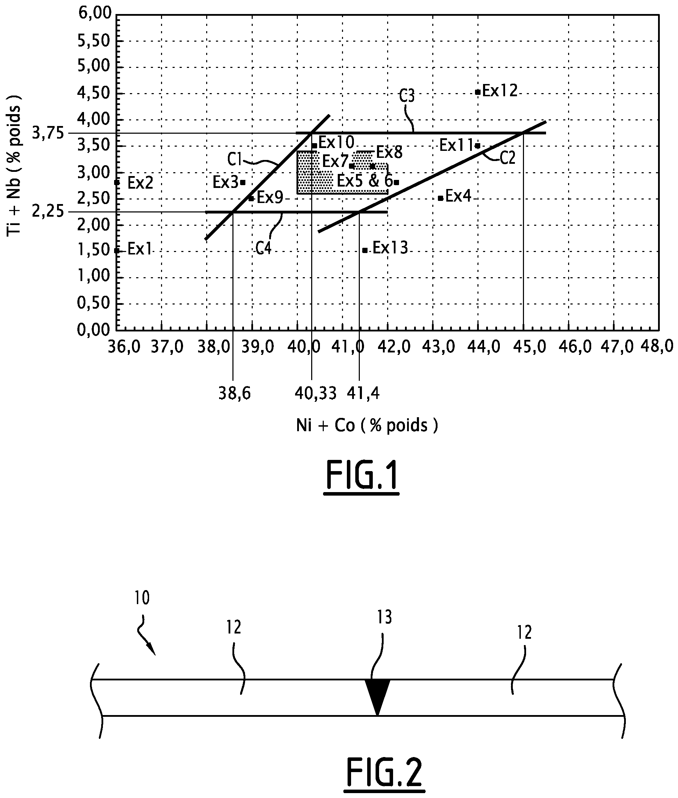

Ces plages ont été représentées graphiquement sur la figure 1, qui est un graphique représentant la teneur en titane + niobium en fonction de la teneur en nickel + cobalt de l'alliage constituant le fil de soudure. Sur cette figure :

- la courbe notée C1 a pour équation Ti+Nb = 0,8667 x (Ni+Co) - 31,20% ;
- la courbe notée C2 a pour équation Ti+Nb = 0,4167 x (Ni+Co) - 15,0% ;
- la courbe notée C3 a pour équation Ti+Nb = 3,75% ; et
- la courbe notée C4 a pour équation Ti+Nb = 2,25%.

Plus particulièrement :

La courbe C1 délimite le domaine de teneurs en nickel + cobalt (avec $Co \leq 0,50\%$) minimales dans lequel la soudure obtenue à partir du fil de soudure présente une stabilité à la transformation martensitique à température cryogénique supérieure ou égale à celle du métal de base.

La courbe C2 délimite le domaine de teneurs en nickel + cobalt (avec $Co \leq 0,50\%$) maximales dans lequel on obtient un overmatching des propriétés mécaniques de la soudure à température cryogénique.

La courbe C3 délimite le domaine de teneurs en titane + niobium (avec $Nb \leq 0,50\%$) maximales pour lequel le coefficient de dilatation thermique de la soudure entre - 180°C et 0°C est inférieur à $7,5 \times 10^{-6}$/°C.

La courbe C4 délimite le domaine de teneurs en titane + niobium (avec $Nb \leq 0,50\%$) minimales pour lequel on obtient un overmatching des propriétés mécaniques de la soudure à température ambiante.

Par ailleurs, on notera que dans l'alliage constituant le fil de soudure :

- la teneur en silicium supérieure ou égale à 0,01% permet d'assurer la désoxydation de l'alliage ;
- la teneur en chrome inférieure ou égale à 0,50% améliore la tenue de l'alliage à la corrosion atmosphérique ;
- la teneur en cobalt inférieure ou égale à 0,50% améliore la résilience des soudures.

De manière préférée, la teneur en niobium du fil de soudure est inférieure ou égale à 0,01% en poids de façon à éviter ou limiter la formation de carbure de niobium susceptible de fragiliser la soudure.

De manière préférée, la teneur en cobalt du fil de soudure est inférieure ou égale à 0,10% en poids de façon à rendre la soudure encore moins sensible à la transformation martensitique à température cryogénique.

De manière préférée, la teneur en carbone du fil de soudure est inférieure ou égale à 0,015% en poids afin de limiter la fraction volumique de carbure de Ti/Nb susceptible de fragiliser la soudure.

De manière préférée, la teneur en chrome du fil de soudure est inférieure ou égale à 0,10% de façon à réduire encore davantage le coefficient de dilatation thermique de la soudure et à rendre la soudure encore moins sensible à la transformation martensitique.

De manière encore préférée, le fil de soudure est réalisé dans un alliage comprenant, en % en poids :

$40,0\% \leq Ni + Co \leq 42,0\%$
$2,60\% \leq Ti + Nb \leq 3,40\%$
$traces \leq Nb \leq 0,01\%$
$traces \leq Co \leq 0,10\%$
$0,01\% \leq Mn \leq 0,10\%$
$0,01\% \leq Si \leq 0,10\%$
$traces \leq C \leq 0,015\%$
$traces \leq Cr \leq 0,10\%$,

le reste étant constitué de fer et d'impuretés inévitables résultant de l'élaboration.

Cette composition préférée est matérialisée par un rectangle sur la figure 1.

Un fil de soudure ayant cette composition est particulièrement avantageux. En effet, il permet d'obtenir un très bon compromis entre les diverses propriétés du joint soudé formé entre des parties de pièces réalisées dans le métal de base, à savoir une résilience (KCV) à -196°C supérieure ou égale à 130 J/cm$^2$, un coefficient moyen de dilatation thermique entre -180°C et 0°C inférieur à $5 \times 10^{-6}$/°C, une très faible sensibilité à la transformation martensitique à -196°C et l'overmatching des propriétés mécaniques de la soudure avec le métal de base à -163°C et à 25°C.

Il présente en outre une soudabilité améliorée grâce à sa teneur en titane + niobium inférieure à 3,40%.

De manière encore plus préférée, le fil de soudure présente la composition suivante, en pourcentage en poids :

$41,0\% \leq Ni+Co \leq 42,0\%$
$2,60\% \leq Ti + Nb \leq 3,40\%$
$traces \leq Nb \leq 0,01\%$
$traces \leq Co \leq 0,10\%$
$0,01\% \leq Mn \leq 0,10\%$
$0,01\% \leq Si \leq 0,10\%$
$traces \leq C \leq 0,015\%$
$traces \leq Cr \leq 0,10\%$,

le reste étant constitué de fer et d'impuretés inévitables résultant de l'élaboration.

Ce fil de soudure est particulièrement avantageux. En effet, en plus des avantages mentionnés ci-dessus, le joint soudé obtenu en soudant entre elles des parties de pièces réalisées dans le métal de base présente une stabilité à la transformation martensitique encore meilleure. En effet, la teneur en martensite du joint soudé reste inférieure ou égale à 3% lorsque le joint soudé est soumis à une déformation de 25% par traction plane interrompue à température cryogénique, notamment à -196°C, selon le test de stabilité décrit par la suite. Ainsi, les joints soudés obtenus entre des pièces réalisées dans le métal de base en utilisant ce fil de soudure comme fil d'apport présentent une tenue à la corrosion par piqûre encore améliorée. Par ailleurs, la réduction du taux de martensite homogénéise le coefficient de dilatation thermique dans le joint soudé et permet de réduire encore davantage les écarts de dilatation thermique locaux liés à la présence de martensite.

L'invention a également pour objet un procédé de fabrication d'un fil de soudure tel que décrit ci-dessus.

Ce procédé comprend une étape d'élaboration de l'alliage constituant le fil de soudure. L'alliage décrit ci-dessus est élaboré de manière classique, par exemple dans un four électrique à arc électrique ou dans un four sous vide à induction.

Lors de l'élaboration de l'alliage constituant le fil de soudure, on cherche à réduire au maximum les teneurs en éléments tels que le soufre et le phosphore, en particulier afin d'éviter toute sensibilité de l'alliage à la crique de solidification et à la crique de réchauffage et ainsi favoriser la transformation à chaud et la soudabilité du fil de soudure. Ces éléments résiduels font partie des impuretés résultant de l'élaboration.

Une fois l'alliage élaboré, on forme des demi-produits à partir de cet alliage. A cet effet, l'alliage est soit coulé en lingots, soit coulé directement sous forme de billettes, notamment au moyen d'une coulée continue. Les demi-produits obtenus à l'issue de cette étape sont donc avantageusement des lingots ou des billettes.

En option, ces demi-produits sont refondus sous vide ou sous laitier électro-conducteur. Cette étape a pour effet de diminuer la teneur en résiduels non souhaités, et améliore donc la pureté de l'alliage.

Ensuite, on transforme les demi-produits par transformation à chaud entre 1050°C et 1250°C pour former un fil.

En particulier, au cours de cette étape de transformation à chaud, les demi-produits, c'est-à-dire notamment les lingots ou billettes, sont transformés à chaud de façon à réduire leur section, en leur conférant, par exemple, une section carrée, d'environ 100mm à 200mm de côté. On obtient ainsi un demi-produit de section réduite. La longueur de ce demi-produit de section réduite est notamment comprise entre 10 mètres et 20 mètres.

Avantageusement, la réduction de la section des demi-produits est réalisée par une ou plusieurs passes successives de laminage à chaud.

Les demi-produits de section réduite sont ensuite à nouveau transformés à chaud pour obtenir le fil. Le fil peut être en particulier un fil machine. Il présente par exemple un diamètre compris entre 5mm et 21mm, et en particulier environ égal à 5,5mm.

Avantageusement, au cours de cette étape, le fil est produit par laminage à chaud sur un train à fil.

Le fil est ensuite décapé, puis enroulé sous forme de bobine.

Il est alors tréfilé au moyen d'une installation de tréfilage de type connu pour obtenir le fil de soudure. Ce fil de soudure présente un diamètre inférieur à celui du fil de départ. Son diamètre est notamment compris entre 0,5mm et 1,5mm. Il est avantageusement compris entre 0,8mm et 1,2mm.

L'invention a également pour objet l'utilisation du fil de soudure tel que défini précédemment pour souder entre elles au moins deux parties de pièces réalisées dans le métal de base défini précédemment.

L'invention a également pour objet un procédé de soudage pour souder entre elles au moins deux parties de pièces 12 réalisées dans le métal de base défini précédemment de manière à réaliser un assemblage soudé 10 (Figure 2).

Dans un premier temps, on fournit un fil de soudure tel qu'il a été décrit précédemment. On fournit également des parties de pièces 12 réalisées dans le métal de base que l'on souhaite souder entre elles au moyen du procédé de soudage.

On soude ensuite entre elles les parties de pièces 12 en utilisant le fil de soudure comme fil d'apport.

Au cours de cette étape, on réalise par exemple soit une soudure à clin soit une soudure bout à bout. Le choix du type de soudure dépend notamment de la nature et de la forme des parties de pièces 12 à souder et de la forme souhaitée de l'assemblage soudé 10.

L'étape de soudage peut comprendre une ou plusieurs passes de soudure. Classiquement, elle comprend une première passe de soudure appelée passe de fond, suivie d'une ou plusieurs passes de soudure additionnelles, appelées passes de remplissage.

Chacune des passes de soudure est réalisée en utilisant comme fil d'apport le fil de soudure selon l'invention, tel qu'il a été décrit précédemment. On limite ainsi la dilution de ce fil de soudure à la dilution par le métal de base fondu résultant du soudage.

Le soudage est réalisé de manière manuelle ou automatique.

Avantageusement, le soudage est réalisé par un procédé de soudage à basse énergie de telle sorte que la zone affectée thermiquement des parties de pièces 12 à souder soit la moins large possible. En effet, le grossissement des grains du métal dans la zone affectée thermiquement engendre un affaiblissement mécanique de cette zone, et il est donc important de minimiser sa largeur autant que possible.

Le soudage est par exemple réalisé par soudage plasma ou par soudage TIG (« Tungsten Inert Gas » en anglais) ou MIG (« Métal Inert Gas » en anglais) en utilisant le fil de soudure selon l'invention comme fil d'apport.

De préférence, la passe de fond est réalisée par soudage plasma, et les passes de remplissage sont réalisées par soudage MIG ou TIG, et avantageusement par soudage TIG. En effet, les procédés de soudage MIG et TIG sont des procédés de soudage à plus basse énergie que le soudage plasma.

A l'issue de ce procédé, on obtient un assemblage soudé 10 comprenant les parties de pièces 12, liées entre elles par un cordon de soudure 13 obtenu à partir du fil de soudure tel que décrit précédemment. Un tel assemblage soudé 10 est illustré sur la figure 2.

Plus particulièrement, ce procédé de soudage peut être utilisé pour fabriquer un tronçon de tube réalisé dans le métal de base tel que défini précédemment.

Ainsi, l'invention a également pour objet un procédé de fabrication d'un tel tronçon de tube.

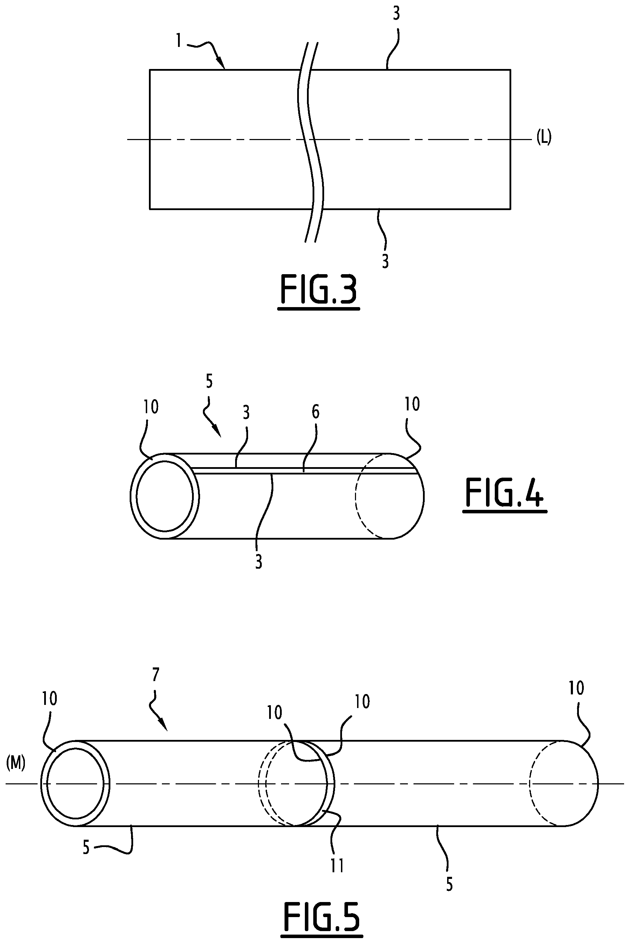

Le procédé comprend la fourniture d'une tôle 1 réalisée dans le métal de base. Une telle tôle 1 est représentée sur la figure 3. Elle s'étend selon une direction longitudinale L et présente des bords longitudinaux 3 sensiblement parallèles à la direction longitudinale L. Elle présente par exemple une épaisseur comprise entre 2 mm et 18mm.

Le procédé comprend en outre une étape consistant à replier cette tôle 1 de manière à amener les deux bords longitudinaux 3 en regard, suivie d'une étape consistant à souder entre eux les deux bords longitudinaux 3 en regard en utilisant le procédé de soudage défini précédemment.

Dans ce cas, les parties de pièces 12 décrites dans le cadre du procédé de soudage comprennent les bords longitudinaux 3 de la tôle 1.

La soudure réalisée au cours de cette étape est une soudure longitudinale.

De préférence, il s'agit d'une soudure bout à bout.

A l'issue de ce procédé, on obtient un tronçon de tube 5, tel qu'illustré sur la figure 4, dans lequel la tôle 1 est repliée en forme de tube, et les bords longitudinaux 3 de la tôle 1 sont liés entre eux par un cordon de soudure 6 obtenu à partir du fil de soudure tel que défini précédemment.

En variante, au moins les bords longitudinaux 3 de la tôle 1 sont réalisés dans le métal de base. Le reste de la tôle 1 peut être fabriqué dans un matériau quelconque.

Le procédé de soudage selon l'invention peut également être utilisé pour fabriquer un tube 7 à partir de tronçons de tube réalisés dans le métal de base tel que défini précédemment.

Ainsi, l'invention a également pour objet un procédé de fabrication d'un tube 7. Un tel tube 7 est illustré sur la figure 5.

Au cours de ce procédé, on fournit au moins deux tronçons de tubes 5. Ces tronçons de tube sont par exemple des tronçons de tube 5 obtenus au moyen du procédé de fabrication tel que décrit précédemment.

Chaque tronçon de tube 5 est sensiblement cylindrique d'axe M, et présente deux extrémités longitudinales 10, espacées entre elles selon la direction de l'axe M.

On positionne alors les deux tronçons de tube 5 de manière à ce que leurs extrémités longitudinales 10 soient disposées en regard selon la direction de l'axe M de ces tronçons de tube, puis on soude entre elles les extrémités longitudinales 10 en regard des deux tronçons de tube 5 au moyen du procédé de soudage tel que défini précédemment.

Dans ce cas, les parties de pièces 12 définies dans le cadre du procédé de soudage comprennent les extrémités longitudinales 10 des tronçons de tube 5.

Avantageusement, on réalise lors de cette étape une soudure bout à bout entre les extrémités longitudinales 10 en regard des tronçons de tube 5.

Lorsque l'étape de soudage est réalisée en atelier, on réalise de préférence une soudure circulaire. Par soudure circulaire, on entend, de manière classique, une soudure obtenue en faisant tourner les tronçons de tube 5 à souder par rapport à l'outil de soudage, en particulier par rapport aux torches de soudage.

Lorsque l'étape de soudage est réalisée hors de l'atelier, par exemple sur le site d'implantation du tube 7, on réalise de préférence une soudure orbitale. Par soudure orbitale, on entend une soudure réalisée en faisant tourner l'outil de soudage, à savoir en particulier les torches de soudage, par rapport aux tronçons de tube 5 à souder.

Cette étape de soudage est réalisée un nombre de fois égal au nombre de tronçons de tube 5 à souder pour former le tube 7 diminué de un.

En variante, ce procédé peut être réalisé avec tout type de tronçon de tube dont les extrémités longitudinales sont réalisées dans le métal de base, quel que soit le procédé d'obtention du tronçon de tube.

En option, on réalise en outre une ligne de fusion sur l'envers de la soudure, c'est-à-dire à l'intérieur du tube 7. Cette étape supplémentaire permet, de manière classique, d'améliorer la géométrie de la soudure.

A l'issue de cette ou de ces étapes de soudage, on obtient le tube 7. Ce tube 7 comprend au moins deux tronçons de tubes 5 successifs assemblés entre eux par un cordon de soudure 11 obtenu à partir du fil de soudure tel que défini précédemment.

Un tel tube 7 est par exemple un tube intérieur d'une conduite de transport d'un liquide cryogénique, en particulier d'une conduite de transport sous-marine.

Des exemples de gaz naturels transportés sont le méthane, le gaz naturel liquéfié, le butane et le propane liquide.

Le procédé de soudage selon l'invention peut également être utilisé pour la fabrication d'une partie de cuve réalisée dans le métal de base.

L'invention a donc également pour objet un procédé de fabrication d'au moins une partie de cuve réalisée dans le métal de base tel que défini précédemment par soudage entre elles de pièces réalisées dans le métal de base.

Par partie de cuve, on entend par exemple une membrane de revêtement intérieur d'une cuve, ou une partie d'une telle membrane.

Les pièces utilisées ont par exemple été fabriquées précédemment par mise en forme de tôles. Il peut également s'agir des tôles elles-mêmes découpées à partir de bandes adaptées. Les tôles utilisées ont par exemple une épaisseur comprise entre 0,2 mm et 10 mm, et avantageusement comprise entre 0,5 mm et 1,5 mm.

Les pièces sont soudées entre elles au moyen de procédé de soudage tel que défini précédemment.

On obtient ainsi une partie de cuve, comprenant au moins deux pièces liées entre elles par un cordon de soudure obtenu à partir du fil de soudure tel que défini précédemment.

Une telle cuve est par exemple une cuve destinée à contenir un liquide cryogénique, tel que du gaz naturel liquéfié.

Exemples

On a fabriqué des fils de soudure selon l'invention en utilisant le procédé de fabrication du fil de soudure décrit précédemment.

Le tableau 1 résume les expériences qui ont été réalisées.

Dans ce tableau, on a marqué par une étoile les fils de soudure qui ne sont pas conformes à l'invention. Ainsi, dans les exemples 1 à 4 et 12 à 14, la composition chimique du fil de soudure n'est pas conforme à l'invention. Dans les exemples 5 à 11, la composition chimique du fil de soudure est conforme à l'invention.

Tableau 1

| Exemple | Composition chimique du fil de soudure en pourcentage en poids | | | | | | | | |
|---|---|---|---|---|---|---|---|---|---|
| | Ni | Co | Ti | Nb | Mn | Si | Cr | C | Fe |
| 1* | 36,0 | traces | 1,5 | traces | 0,07 | 0,05 | 0,02 | 0,005 | reste |
| 2* | 36,0 | traces | 2,8 | traces | 0,08 | 0,05 | 0,02 | 0,004 | reste |
| 3* | 38,8 | traces | 2,8 | traces | 0,09 | 0,05 | 0,03 | 0,004 | reste |
| 4* | 43,2 | traces | 2,5 | traces | 0,07 | 0,04 | 0,02 | 0,005 | reste |
| 5 | 42,2 | traces | 2,8 | traces | 0,1 | 0,05 | 0,05 | 0,01 | reste |
| 6 | 42,2 | traces | 2,5 | 0,3 | 0,09 | 0,05 | 0,05 | 0,004 | reste |
| 7 | 41,2 | traces | 3,1 | traces | 0,07 | 0,05 | 0,02 | 0,007 | reste |
| 8 | 41,2 | 0,5 | 3,1 | traces | 0,06 | 0,03 | 0,02 | 0,005 | reste |
| 9 | 39,0 | traces | 2,5 | traces | 0,05 | 0,02 | 0,02 | 0,006 | reste |
| 10 | 40,4 | traces | 3,5 | traces | 0,05 | 0,03 | 0,02 | 0,004 | reste |
| 11 | 43,7 | 0,3 | 3,2 | 0,3 | 0,07 | 0,04 | 0,02 | 0,004 | reste |
| 12* | 44,0 | traces | 4,5 | traces | 0,07 | 0,02 | 0,02 | 0,004 | reste |
| 13* | 41,5 | traces | 1,5 | traces | 0,07 | 0,04 | 0,02 | 0,006 | reste |
| 14* | 41,2 | traces | traces | 3,1 | 0,05 | 0.04 | 0.03 | 0.004 | reste |

Les compositions en nickel + cobalt et titane + niobium des fils de soudure selon les exemples 1 à 13 ont été portées sur la figure 1. On constate que les fils de soudure selon les exemples 1 à 4 et 12 et 13 se trouvent en-dehors du domaine délimité par les courbes C1 à C4, tandis que les fils de soudure selon les exemples 5 à 11 se trouvent dans ce domaine.

Chacun des fils de soudure selon les exemples 1 à 14 a ensuite été utilisé pour réaliser une soudure entre deux pièces réalisées dans un métal de base, dont la composition chimique est définie dans le tableau 2 ci-après, les teneurs étant exprimées en % en poids.

Tableau 2

| Ni | Mn | Si | Co | C | Cr | S | P | Mo | Fe |
|---|---|---|---|---|---|---|---|---|---|
| 36,0 | 0,34 | 0,20 | 0,03 | 0,0290 | 0,04 | 0,0005 | 0,0022 | 0,02 | reste |

Les conditions de soudure sont habituelles pour la réalisation de soudures au moyen des types de procédés de soudure décrits plus haut.

On a mesuré les propriétés de la soudure obtenue respectivement avec un fil de soudure selon chacun des exemples 1 à 14. Les résultats de ces mesures sont résumés dans le tableau 3 ci-après.

Tableau 3

| Exemple | Zone de rupture à 25°C | Zone de rupture à -163°C | Taux de martensite (%) | Coefficient moyen de dilatation de la soudure entre -180°C et 0°C ($10^{-6}$/°C) | Résilience (Kcv) à -196°C (J/cm²) |
|---|---|---|---|---|---|
| 1* | Zone fondue | Zone fondue | >20% | 1,7 | - |
| 2* | Métal de base | Métal de base | >30% | 2,3 | - |
| 3* | Métal de base | Métal de base | >10% | 3,0 | - |
| 4* | Métal de base | Zone fondue | <5% | 5,4 | 160 |
| 5 | Métal de base | Métal de base | <5% | 4,9 | 145 |
| 6 | Métal de base | Métal de base | <5% | 5,0 | 125 |
| 7 | Métal de base | Métal de base | <3% | 4,5 | 138 |
| 8 | Métal de base | Métal de base | <3% | 4,6 | 130 |
| 9 | Métal de base | Métal de base | <5% | 2,6 | 126 |
| 10 | Métal de base | Métal de base | <5% | 3,6 | 133 |
| 11 | Métal de base | Métal de base | <5% | 4,2 | 149 |
| 12* | Métal de base | Métal de base | <5% | 7,9 | - |
| 13* | Zone fondue | Zone fondue | <5% | 4,4 | 135 |
| 14* | Métal de base | Métal de base | <5% | 4,4 | 80 |

Dans ce tableau :
- Les deux premières colonnes indiquent la zone de l'assemblage soudé dans laquelle se produit la rupture lors d'un essai de rupture sous traction plane réalisé conformément à la norme ASTM E8, respectivement à une température de 25°C et à une température de -163°C.
- La troisième colonne intitulée « Taux de martensite » contient la fraction volumique de martensite de la soudure, mesurée après une déformation de la soudure de 25% par traction plane interrompue à -196°C dans un bain d'azote liquide. Les résultats indiqués dans cette colonne traduisent la stabilité de la soudure à la transformation martensitique.

Plus particulièrement, dans le cadre de cet essai, on prélève des éprouvettes perpendiculairement au joint soudé, puis on réalise deux empreintes de micro-dureté sur le fût des éprouvettes. On mesure la distance entre ces deux empreintes avant l'essai de traction interrompu de manière à obtenir une longueur L0 de l'éprouvette, et après l'essai de traction interrompu de manière à obtenir une longueur L1 de l'éprouvette. La déformation plastique générée à -196°C par la machine de traction est calibrée de telle sorte que l'allongement réparti, donné par la formule:

$$\frac{L1 - L0}{L1},$$

soit compris entre 22,5% et 27,5%. On réalise ensuite un dosage standard $\dfrac{\alpha}{\gamma}$ par diffraction des rayons X. On mesure la fraction volumique de martensite (notée τ%) développée dans le fût de l'éprouvette déformée à -196°C par le rapport

$$\frac{I(110)}{I(110)+I(111)}$$ où $I$(111) est l'intensité intégrée du pic (111) de l'austénite et $I$(110) est l'intensité intégrée du pic (110) de la martensite.

On notera que le taux de martensite (τ%) du métal de base utilisé défini au tableau 3 reste inférieur à 5% après une déformation plastique de 25% par traction à -196°C telle que définie ci-dessus.

- La quatrième colonne contient le coefficient moyen de dilatation thermique de la soudure entre -180°C et 0°C exprimé en $10^{-6}$/°C.

Ce coefficient a été déterminé en mesurant la variation de longueur en micromètres entre -180°C et 0°C d'une éprouvette de longueur 50 mm à 0°C. Le coefficient moyen de dilatation thermique est alors obtenu par application de la formule suivante : $\dfrac{1}{L_0} \times \dfrac{L_0 - L_1}{T_0 - T_1}$ où $L_0$-$L_1$ représente la variation de longueur en micromètres entre 0°C et -180°C, $T_0$ est égale à 0°C et $T_1$ est égale à -180°C.

- La cinquième colonne contient l'énergie de rupture par choc de la soudure (notée Kcv), mesurée conformément à la norme NF EN 10045-1. Cette énergie de rupture est exprimée en J/cm$^2$. Elle traduit la résilience de la soudure.

Le tableau 3 montre que les soudures obtenues au moyen des fils de soudure selon les exemples 5 à 11 présentent l'ensemble des caractéristiques recherchées, décrites précédemment en référence à la composition du fil de soudure.

En effet, dans chacun de ces exemples, la rupture se fait dans le métal de base, et non dans la zone fondue, à la fois à température ambiante (25°C) et à température cryogénique (-163°C). Ces résultats montrent que les propriétés mécaniques de la zone fondue, i.e. de la soudure, sont supérieures à celles du métal de base (overmatching des propriétés mécaniques) à la fois à température ambiante et à température cryogénique. Il est donc possible de dimensionner l'assemblage soudé en tenant compte uniquement des propriétés du métal de base.

Au contraire, dans les exemples 1 et 13 non conformes à l'invention, dans lequel la teneur en titane + niobium du fil de soudure est égale à 1,5%, et donc inférieure à 2,25%, la rupture se produit dans la zone fondue à température ambiante. On n'obtient donc pas d'overmatching des propriétés mécaniques de la soudure à température ambiante dans ce cas.

Dans l'exemple 4 non conforme à l'invention, la teneur en nickel+cobalt du fil de soudure est comprise dans la plage selon l'invention, mais la teneur en titane + niobium est inférieure à la valeur limite inférieure obtenue par application de la relation 0,4167 x (Ni+Co) -15,0%, qui vaut 3,01%. En d'autres termes, pour la teneur en titane + niobium du fil selon l'exemple 4, la teneur en nickel+cobalt est supérieure à la valeur limite supérieure définie par la courbe C2. Or, on constate que la rupture de l'assemblage soudé se produit dans la zone fondue à température cryogénique. On n'obtient donc pas d'overmatching des propriétés mécaniques de la soudure à température cryogénique dans ce cas.

Dans l'exemple 13 non conforme à l'invention, la teneur en titane + niobium est inférieure à la limite inférieure définie par la relation 0,4167 x (Ni+Co) - 15,0% qui vaut 2,31%. En d'autres termes, pour la teneur en titane + niobium du fil selon l'exemple 13, la teneur en nickel + cobalt est supérieure à la valeur limite supérieure définie par la courbe C2. Or, on constate que la rupture de l'assemblage soudé se produit dans la zone fondue à température cryogénique. On n'obtient donc pas l'overmatching des propriétés mécaniques de la soudure à température cryogénique.

Pour les exemples 5 à 11 conformes à l'invention, le taux de martensite (τ%) après une déformation par traction de 25% à -196°C est inférieur à 5%. Ainsi, la stabilité à la transformation martensitique de la soudure selon les exemples 5 à 11 est au moins égale à celle du métal de base utilisé.

Dans les exemples 1 à 3, dans lesquels la teneur en nickel + cobalt du fil de soudure est inférieure à la limite inférieure selon l'invention, délimitée par la courbe C1 pour les teneurs en Ti + Nb respectives de ces fils, on constate également que le taux de martensite après une déformation de 25% à -196°C est très supérieur à 5%. Ainsi, la stabilité à la transformation martensitique de la soudure selon les exemples 1 à 3 est strictement inférieure à celle du métal de base utilisé.

En outre, dans chacun des exemples 5 à 11, on a mesuré un coefficient moyen de dilatation thermique de la soudure inférieur à $7,5 \times 10^{-6}$/°C, c'est-à-dire proche de celui du métal de base.

Dans l'exemple 12 non conforme à l'invention, la teneur en titane + niobium du fil de soudure est supérieure à 3,75%. On constate que le coefficient moyen de dilatation thermique de la soudure obtenue avec le fil de soudure selon l'exemple 12 est supérieur à $7,5 \times 10^{-6}$/°C.

On constate que, dans les exemples 5 à 11, l'énergie de rupture par choc de l'éprouvette à -196°C (température de l'azote liquide) est supérieure à 120 $J/cm^2$. Ainsi, la soudure réalisée au moyen du fil de soudure selon les exemples 5 à 11 présente une ductilité élevée, conforme à la ductilité recherchée, ce qui limite les risques de rupture fragile de la soudure.

Enfin, le fil de soudure selon l'exemple 14 non conforme à l'invention présente une teneur en niobium supérieure à 0,50%. On constate que la soudure obtenue au moyen de ce fil présente une ductilité faible à température cryogénique, puisque sa résilience est égale à 80$J/cm^2$ à -196°C. La soudure ainsi formée est donc fragile.

Les assemblages de pièces en alliage Fe-36Ni soudées entre elles au moyen du fil de soudure selon l'invention sont particulièrement avantageux.

En effet, grâce à l'overmatching des propriétés mécaniques de la soudure à température ambiante et cryogénique, le dimensionnement de l'assemblage peut être réalisé en se fondant sur les propriétés du métal de base, sans tenir compte des propriétés du joint soudé.

De plus, l'amélioration des caractéristiques mécaniques des joints soudés, due à l'utilisation du fil de soudure selon l'invention, améliore très significativement la tenue en fatigue des soudures à température cryogénique. Des essais de fatigue réalisés en traction plane alternée sur éprouvettes prismatiques usinées perpendiculairement aux soudures, avec un ratio de traction R = 0,1 (ratio entre la force maximum et la force minimum), montrent une augmentation de la durée de vie d'un facteur 10 et une augmentation de plus de 30% de la force maximum à rupture jusqu'à 500 000 cycles des joints soudés obtenus avec le fil de soudure selon l'invention par rapport aux joints soudés obtenus avec des fils de soudure connus en alliage Fe-36Ni.

Par ailleurs, le joint soudé présente un coefficient moyen de dilatation thermique faible, proche de celui du métal de base, ce qui est avantageux lorsque l'assemblage est destiné à contenir un liquide cryogénique. L'adaptation des coefficients de dilatation thermique entre le métal de base et la soudure atténue les contraintes résiduelles au sein des soudures et par suite augmente la tenue en fatigue de celles-ci, notamment lors des variations de températures générées dans les phases de chargement ou déchargement du liquide cryogénique.

Par ailleurs, grâce à la ductilité améliorée du joint soudé, le risque de rupture fragile de l'assemblage au niveau du joint soudé en cas d'incident, et notamment en cas de choc, est limité. Cette ductilité améliorée permet donc notamment de réparer des fuites éventuelles résultant de fissures apparaissant au niveau du joint soudé avant propagation de ces fissures. Le joint soudé obtenu au moyen du fil de soudure selon l'invention est ainsi conforme à la spécification connue de « fuite avant rupture », généralement désignée par le terme anglais « leak-before-break ».

Enfin, les teneurs plus élevées en nickel et titane et la stabilité du joint soudé à la transformation martensitique permettent de réduire la vitesse de corrosion atmosphérique des joints soudés obtenus au moyen du fil de soudure selon l'invention par rapport aux joints soudés réalisés avec des fils de soudure connus en alliage Fe-36Ni.

**Revendications**

1. Fil de soudure destiné à être utilisé pour souder entre elles des parties de pièces, lesdites parties présentant la composition suivante, en % en poids :

   35,0% $\leq$ Ni $\leq$ 37,0%
   traces $\leq$ C $\leq$ 0,10%
   traces $\leq$ Mn $\leq$ 0,60%
   traces $\leq$ P $\leq$ 0,025%
   traces $\leq$ S $\leq$ 0,025%
   traces $\leq$ Si $\leq$ 0,35%
   traces $\leq$ Cr $\leq$ 0,50%
   traces $\leq$ Mo $\leq$ 0,50%
   traces $\leq$ Co $\leq$ 0,50%

   le reste étant constitué de fer et d'impuretés inévitables résultant de l'élaboration,
   le fil de soudure étant **caractérisé en ce qu'**il est réalisé dans un alliage comprenant, en % en poids :

   38,6% $\leq$ Ni+Co $\leq$ 45,0%
   traces $\leq$ Co $\leq$ 0,50%

$2,25\% \leq$ Ti+Nb $\leq 0,8667$ x (Ni+Co) - 31,20% si 38,6% $\leq$ Ni+Co $\leq 40,33\%$

$2,25\% \leq$ Ti+Nb $\leq 3,75\%$ si 40,33% $\leq$ Ni+Co $\leq 41,4\%$

$0,4167$ x (Ni+Co) - 15,0% $\leq$ Ti+Nb $\leq 3,75\%$ si 41,4% $\leq$ Ni+Co $\leq 45,0\%$

traces $\leq$ Nb $\leq 0,50\%$

$0,01\% \leq$ Mn $\leq 0,30\%$

$0,01\% \leq$ Si $\leq 0,25\%$

traces $\leq$ C $\leq 0,05\%$

traces $\leq$ Cr $\leq 0,50\%$

le reste étant constitué de fer et d'impuretés inévitables résultant de l'élaboration.

2. Fil de soudure selon la revendication 1, dans lequel la teneur en niobium du fil de soudure est inférieure ou égale à 0,01% en poids.

3. Fil de soudure selon l'une des revendications 1 et 2, dans lequel la teneur en cobalt du fil de soudure est inférieure ou égale à 0,10% en poids.

4. Fil de soudure selon l'une quelconque des revendications 1 à 3, dans lequel la teneur en carbone du fil de soudure est inférieure ou égale à 0,015% en poids.

5. Fil de soudure selon l'une quelconque des revendications précédentes, lequel est réalisé dans un alliage comprenant, en % en poids :

$40,0\% \leq$ Ni+Co $\leq 42,0\%$

$2,60\% \leq$ Ti + Nb $\leq 3,40\%$

traces $\leq$ Nb $\leq 0,01$ %

traces $\leq$ Co $\leq 0,10\%$

$0,01\% \leq$ Mn $\leq 0,10\%$

$0,01\% \leq$ Si $\leq 0,10\%$

traces $\leq$ C $\leq 0,015\%$

traces $\leq$ Cr $\leq 0,10\%$,

le reste étant constitué de fer et d'impuretés inévitables résultant de la fabrication.

6. Fil de soudure selon l'une quelconque des revendications précédentes, lequel est réalisé dans un alliage comprenant, en % en poids :

$41,0\% \leq$ Ni+Co $\leq 42,0\%$

$2,60\% \leq$ Ti + Nb $\leq 3,40\%$

traces $\leq$ Nb $\leq 0,01\%$

traces $\leq$ Co $\leq 0,10\%$

$0,01\% \leq$ Mn $\leq 0,10\%$

$0,01\% \leq$ Si $\leq 0,10\%$

traces $\leq$ C $\leq 0,015\%$

traces $\leq$ Cr $\leq 0,10\%$,

le reste étant constitué de fer et d'impuretés inévitables résultant de l'élaboration.

7. Fil de soudure selon l'une quelconque des revendications précédentes, dont le diamètre est compris entre 0,5 mm et 1,5 mm, et de préférence compris entre 0,8 mm et 1,2 mm.

8. Procédé de fabrication d'un fil de soudure selon l'une quelconque des revendications 1 à 7, le procédé comprenant les étapes suivantes :

- fourniture d'un demi-produit réalisé dans un alliage ayant la composition du fil de soudure selon l'une des revendications 1 à 7 ;
- transformation à chaud de ce demi-produit pour former un fil ; et
- transformation du fil en fil de soudure, de diamètre inférieur à celui du fil, ladite transformation comprenant une étape de tréfilage.

9. Procédé de fabrication selon la revendication 8, dans lequel la transformation du fil en fil de soudure comprend le décapage du fil, et l'enroulement du fil décapé en bobine, l'étape de tréfilage consistant à tréfiler le fil décapé enroulé en bobine.

10. Procédé de fabrication selon l'une quelconque des revendications 8 et 9, dans lequel le demi-produit est une billette ou un lingot.

11. Procédé de fabrication selon l'une quelconque des revendications 8 à 10, dans lequel le fil a un diamètre compris entre 5mm et 21mm, et en particulier environ égal à 5,5mm.

12. Procédé de fabrication selon l'une quelconque des revendications 8 à 11, dans lequel la transformation à chaud du demi-produit pour former le fil comprend le laminage à chaud du demi-produit pour réduire sa section et le laminage à chaud du demi-produit à section réduite pour former le fil.

13. Procédé de soudage entre elles d'au moins deux parties de pièces (12) présentant la composition suivante, en % en poids :

$35,0\% \leq Ni \leq 37,0\%$
$traces \leq C \leq 0,10\%$
$traces \leq Mn \leq 0,60\%$
$traces \leq P \leq 0,025\%$
$traces \leq S \leq 0,025\%$
$traces \leq Si \leq 0,35\%$
$traces \leq Cr \leq 0,50\%$
$traces \leq Mo \leq 0,50\%$
$traces \leq Co \leq 0,50\%$

le reste étant constitué de fer et d'impuretés inévitables résultant de la fabrication, le procédé comprenant successivement les étapes suivantes :

- fourniture d'un fil de soudure selon l'une quelconque des revendications 1 à 7, et
- soudage entre elles des deux parties de pièces (12) en utilisant le fil de soudure comme fil d'apport.

14. Procédé de soudage selon la revendication 13, dans lequel toutes les passes de soudage sont réalisées en utilisant le fil de soudure selon l'une quelconque des revendications 1 à 7 comme fil d'apport.

15. Procédé de fabrication d'un tronçon de tube (5), comprenant les étapes successives suivantes :

- fourniture d'une tôle (1) présentant deux bords longitudinaux (3) et réalisée dans un métal de base comprenant, en % en poids :

$35,0\% \leq Ni \leq 37,0\%$
$traces \leq C \leq 0,10\%$
$traces \leq Mn \leq 0,60\%$
$traces \leq P \leq 0,025\%$
$traces \leq S \leq 0,025\%$
$traces \leq Si \leq 0,35\%$
$traces \leq Cr \leq 0,50\%$
$traces \leq Mo \leq 0,50\%$
$traces \leq Co \leq 0,50\%$

le reste étant constitué de fer et d'impuretés inévitables résultant de la fabrication ; et
- soudage entre eux des bords longitudinaux (3) de la tôle (1) en utilisant le procédé de soudage selon l'une des revendications 13 et 14 pour former le tronçon de tube (5).

16. Procédé de fabrication d'un tronçon de tube selon la revendication 15, dans lequel la soudure réalisée entre les bords longitudinaux (3) de la tôle (1) pour former le tronçon de tube (5) est une soudure longitudinale bout à bout.

**17.** Procédé de fabrication d'un tube (7) comprenant les étapes successives suivantes :

- fourniture d'un premier tronçon de tube (5) et d'un deuxième tronçon de tube (5) s'étendant chacun suivant un axe longitudinal (M), et réalisés dans un métal de base comprenant, en % en poids :

$35,0\% \leq Ni \leq 37,0\%$
$traces \leq C \leq 0,10\%$
$traces \leq Mn \leq 0,60\%$
$traces \leq P \leq 0,025\%$
$traces \leq S \leq 0,025\%$
$traces \leq Si \leq 0,35\%$
$traces \leq Cr \leq 0,50\%$
$traces \leq Mo \leq 0,50\%$
$traces \leq Co \leq 0,50\%$

le reste étant constitué de fer et d'impuretés inévitables résultant de la fabrication ;
- positionnement des premier et deuxième tronçons de tube (5) de telle sorte qu'une extrémité longitudinale (10) du premier tronçon de tube (5) soit disposée en regard d'une extrémité longitudinale (10) du deuxième tronçon de tube (5) selon l'axe longitudinal (M) des premier et deuxième tronçons de tube (5) ; et
- soudage entre elles de deux extrémités longitudinales (10) en regard des premier et deuxième tronçons de tube (5) en utilisant le procédé de soudage selon l'une des revendications 13 et 14 pour former le tube (7).

**18.** Procédé de fabrication d'un tube (7) selon la revendication 17, dans lequel le soudage des extrémités longitudinales (10) en regard des premier et deuxième tronçons de tube (5) est un soudage bout à bout circulaire ou un soudage bout à bout orbital.

**19.** Procédé de fabrication d'une partie de cuve, destinée à contenir un liquide cryogénique, comprenant les étapes de :

- fourniture de pièces, éventuellement mises en forme, réalisées chacune dans un métal de base comprenant, en % en poids :

$35,0\% \leq Ni \leq 37,0\%$
$traces \leq C \leq 0,10\%$
$traces \leq Mn \leq 0,60\%$
$traces \leq P \leq 0,025\%$
$traces \leq S \leq 0,025\%$
$traces \leq Si \leq 0,35\%$
$traces \leq Cr \leq 0,50\%$
$traces \leq Mo \leq 0,50\%$
$traces \leq Co \leq 0,50\%$

le reste étant constitué de fer et d'impuretés inévitables résultant de la fabrication, et
- soudage entre elles de ces parties de pièces (12) en utilisant le procédé de soudage selon l'une des revendications 13 et 14 pour former la partie de cuve.

**20.** Assemblage soudé (10) comprenant une première partie de pièce (12) et une deuxième partie de pièce (12), réalisées chacune dans un métal de base comprenant, en % en poids :

$35,0\% \leq Ni \leq 37,0\%$
$traces \leq C \leq 0,10\%$
$traces \leq Mn \leq 0,60\%$
$traces \leq P \leq 0,025\%$
$traces \leq S \leq 0,025\%$
$traces \leq Si \leq 0,35\%$
$traces \leq Cr \leq 0,50\%$
$traces \leq Mo \leq 0,50\%$

traces $\leq$ Co $\leq$ 0,50%

le reste étant constitué de fer et d'impuretés inévitables résultant de la fabrication, la première et la deuxième partie de pièces (12) étant liées entre elles par un cordon de soudure (13) obtenu à partir du fil de soudure selon l'une quelconque des revendications 1 à 7.

21. Partie de cuve comprenant des pièces réalisées dans un métal de base comprenant, en % en poids :

35,0% $\leq$ Ni $\leq$ 37,0%
traces $\leq$ C $\leq$ 0,10%
traces $\leq$ Mn $\leq$ 0,60%
traces $\leq$ P $\leq$ 0,025%
traces $\leq$ S $\leq$ 0,025%
traces $\leq$ Si $\leq$ 0,35%
traces $\leq$ Cr $\leq$ 0,50%
traces $\leq$ Mo $\leq$ 0,50%
traces $\leq$ Co $\leq$ 0,50%

le reste étant constitué de fer et d'impuretés inévitables résultant de la fabrication, liées entre elles par des cordons de soudure obtenus à partir du fil de soudure selon l'une quelconque des revendications 1 à 7.

22. Tronçon de tube (5) comprenant une tôle (1) repliée en forme de tube et réalisée dans un métal de base comprenant, en % en poids :

35,0% $\leq$ Ni $\leq$ 37,0%
traces $\leq$ C $\leq$ 0,10%
traces $\leq$ Mn $\leq$ 0,60%
traces $\leq$ P $\leq$ 0,025%
traces $\leq$ S $\leq$ 0,025%
traces $\leq$ Si $\leq$ 0,35%
traces $\leq$ Cr $\leq$ 0,50%
traces $\leq$ Mo $\leq$ 0,50%
traces $\leq$ Co $\leq$ 0,50%

le reste étant constitué de fer et d'impuretés inévitables résultant de la fabrication, et présentant des bords longitudinaux (3) reliés entre eux par un cordon de soudure (6) obtenu à partir du fil de soudure selon l'une quelconque des revendications 1 à 7.

23. Tube (7) comprenant au moins deux tronçons de tube (5) réalisés chacun dans un métal de base comprenant, en % en poids :

35,0% $\leq$ Ni $\leq$ 37,0%
traces $\leq$ C $\leq$ 0,10%
traces $\leq$ Mn $\leq$ 0,60%
traces $\leq$ P $\leq$ 0,025%
traces $\leq$ S $\leq$ 0,025%
traces $\leq$ Si $\leq$ 0,35%
traces $\leq$ Cr $\leq$ 0,50%
traces $\leq$ Mo $\leq$ 0,50%
traces $\leq$ Co $\leq$ 0,50%

le reste étant constitué de fer et d'impuretés inévitables résultant de la fabrication,
deux tronçons de tube (5) successifs étant liés entre eux par un cordon de soudure (11) obtenu à partir du fil de soudure selon l'une quelconque des revendications 1 à 7.

**Patentansprüche**

1. Schweißdraht, der vorgesehen ist, um verwendet zu werden, um Teile von Stücken miteinander zu verschweißen, wobei die Teile die folgende Zusammensetzung in Gew.-% aufweisen:

   $35{,}0\% \leq Ni \leq 37{,}0\%$
   $Spuren \leq C \leq 0{,}10\%$
   $Spuren \leq Mn \leq 0{,}60\%$
   $Spuren \leq P \leq 0{,}025\%$
   $Spuren \leq S \leq 0{,}025\%$
   $Spuren \leq Si \leq 0{,}35\%$
   $Spuren \leq Cr \leq 0{,}50\%$
   $Spuren \leq Mo \leq 0{,}50\%$
   $Spuren \leq Co \leq 0{,}50\%$

   wobei der Rest aus Eisen und aus unvermeidbaren Verunreinigungen gebildet ist, die sich aus der Verarbeitung ergeben,
   wobei der Schweißdraht **dadurch gekennzeichnet ist, dass** er aus einer Legierung gebildet ist, die in Gew.-% aufweist:

   $38{,}6\% \leq Ni+Co \leq 45\%$
   $Spuren \leq Co \leq 0{,}50\%$
   $2{,}25\% \leq Ti+Nb \leq 0{,}8667 \text{ x } (Ni+Co) - 31{,}20\%, \text{ wenn } 38{,}6\% \leq Ni+Co \leq 40{,}33\%$
   $2{,}25\% \leq Ti+Nb \leq 3{,}75\%, \text{ wenn } 40{,}33\% \leq Ni+Co \leq 41{,}4\%$
   $0{,}4167 \text{ x } (Ni+Co) - 15{,}0\% \leq Ti+Nb \leq 3{,}75\%, \text{ wenn } 41{,}4\% \leq Ni+Co \leq 45{,}0\%$
   $Spuren \leq Nb \leq 0{,}50\%$
   $0{,}01\% \leq Mn \leq 0{,}30\%$
   $0{,}01\% \leq Si \leq 0{,}25\%$
   $Spuren \leq C \leq 0{,}05\%$
   $Spuren \leq Cr \leq 0{,}50\%$

   wobei der Rest aus Eisen und aus unvermeidbaren Verunreinigungen gebildet ist, die sich aus der Verarbeitung ergeben.

2. Schweißdraht gemäß Anspruch 1, wobei der Gehalt des Schweißdrahtes an Niob kleiner oder gleich 0.01 Gew.-% ist.

3. Schweißdraht gemäß einem der Ansprüche 1 und 2, wobei der Gehalt des Schweißdrahtes an Kobalt kleiner oder gleich 0,10 Gew.-% ist.

4. Schweißdraht gemäß irgendeinem der Ansprüche 1 bis 3, wobei der Gehalt des Schweißdrahtes an Kohlenstoff kleiner oder gleich 0,015 Gew.-% ist.

5. Schweißdraht gemäß irgendeinem der vorhergehenden Ansprüche, wobei dieser aus einer Legierung gebildet ist, die in Gew.-% aufweist:

   $40{,}0\% \leq Ni+Co \leq 42{,}0\%$
   $2{,}60\% \leq Ti+Nb \leq 3{,}40\%$
   $Spuren \leq Nb \leq 0{,}01\%$
   $Spuren \leq Co \leq 0{,}10\%$
   $0{,}01\% \leq Mn \leq 0{,}10\%$
   $0{,}01\% \leq Si \leq 0{,}10\%$
   $Spuren \leq C \leq 0{,}015\%$
   $Spuren \leq Cr \leq 0{,}10\%,$

   wobei der Rest aus Eisen und aus unvermeidbaren Verunreinigungen gebildet ist, die sich aus der Herstellung ergeben.

6. Schweißdraht gemäß irgendeinem der vorhergehenden Ansprüche, wobei dieser aus einer Legierung gebildet ist, die in Gew.-% aufweist:

$41{,}0\% \leq Ni+Co \leq 42{,}0\%$
$2{,}60\% \leq Ti + Nb \leq 3{,}40\%$
$Spuren \leq Nb \leq 0{,}01\%$
$Spuren \leq Co \leq 0{,}10\%$
$0{,}01\% \leq Mn \leq 0{,}10\%$
$0{,}01\% \leq Si \leq 0{,}10\%$
$Spuren \leq C \leq 0{,}015\%$
$Spuren \leq Cr \leq 0{,}10\%$,

wobei der Rest aus Eisen und aus unvermeidbaren Verunreinigungen gebildet ist, die sich aus der Verarbeitung ergeben.

7. Schweißdraht gemäß irgendeinem der vorhergehenden Ansprüche, dessen Durchmesser zwischen 0,5 mm und 1,5 mm beträgt und vorzugsweise zwischen 0,8 mm und 1,2 mm beträgt.

8. Verfahren zum Herstellen eines Schweißdrahtes gemäß irgendeinem der Ansprüche 1 bis 7, wobei das Verfahren die folgenden Schritte aufweist:

- Bereitstellen eines Halbzeugs, das aus einer Legierung gebildet ist, die die Zusammensetzung des Schweißdrahtes gemäß einem der Ansprüche 1 bis 7 hat,
- Warmumformen dieses Halbzeugs, um einen Draht auszubilden, und
- Umwandeln des Drahtes in einen Schweißdraht mit einem Durchmesser, der kleiner als derjenige des Drahtes ist, wobei das Umwandeln einen Schritt des Drahtziehens aufweist.

9. Verfahren zum Herstellen gemäß Anspruch 8, wobei das Umwandeln des Drahtes in einen Schweißdraht das Dekapieren des Drahtes und das Wickeln des dekapierten Drahtes auf eine Spule aufweist, wobei der Schritt des Drahtziehens darin besteht, den auf die Spule gewickelten dekapierten Draht zu Draht zu ziehen.

10. Verfahren zum Herstellen gemäß irgendeinem der Ansprüche 8 und 9, wobei das Halbzeug ein Barren oder ein Block ist.

11. Verfahren zum Herstellen gemäß irgendeinem der Ansprüche 8 bis 10, wobei der Draht einen Durchmesser hat, der zwischen 5 mm und 21 mm beträgt und insbesondere etwa gleich 5,5 mm ist.

12. Verfahren zum Herstellen gemäß irgendeinem der Ansprüche 8 bis 11, wobei das Warmumformen des Halbzeugs zum Ausbilden des Drahtes das Warmwalzen des Halbzeugs, um seinen Querschnitt zu verringern, und das Warmwalzen des Halbzeugs mit verringertem Querschnitt aufweist, um den Draht auszubilden.

13. Verfahren zum miteinander Verschweißen von mindestens zwei Teilen von Stücken (12), die die folgende Zusammensetzung in Gew.-% aufweisen:

$35{,}0\% \leq Ni \leq 37{,}0\%$
$Spuren \leq C \leq 0{,}10\%$
$Spuren \leq Mn \leq 0{,}60\%$
$Spuren \leq P \leq 0{,}025\%$
$Spuren \leq S \leq 0{,}025\%$
$Spuren \leq Si \leq 0{,}35\%$
$Spuren \leq Cr \leq 0{,}50\%$
$Spuren \leq Mo \leq 0{,}50\%$
$Spuren \leq Co \leq 0{,}50\%$

wobei der Rest aus Eisen und aus unvermeidbaren Verunreinigungen gebildet ist, die sich aus der Herstellung ergeben, wobei das Verfahren aufeinanderfolgend die folgenden Schritte aufweist:

- Bereitstellen eines Schweißdrahtes gemäß irgendeinem der Ansprüche 1 bis 7 und
- miteinander Verschweißen der beiden Teile von Stücken (12) mittels des Schweißdrahtes als Schweißdraht.

**14.** Verfahren zum Schweißen gemäß Anspruch 13, wobei alle Schweißgänge mittels des Schweißdrahtes gemäß irgendeinem der Ansprüche 1 bis 7 als Schweißdraht durchgeführt werden.

**15.** Verfahren zum Herstellen eines Rohrabschnitts (5), aufweisend die folgenden aufeinanderfolgenden Schritte:

- Bereitstellen eines Blechs (1), das zwei Längsränder (3) aufweist und aus einem Basismetall gebildet ist, das in Gew.-% aufweist:

$35,0\% \leq Ni \leq 37,0\%$
$Spuren \leq C \leq 0,10\%$
$Spuren \leq Mn \leq 0,60\%$
$Spuren \leq P \leq 0,025\%$
$Spuren \leq S \leq 0,025\%$
$Spuren \leq Si \leq 0,35\%$
$Spuren \leq Cr \leq 0,50\%$
$Spuren \leq Mo \leq 0,50\%$
$Spuren \leq Co \leq 0,50\%$

wobei der Rest aus Eisen und aus unvermeidbaren Verunreinigungen gebildet ist, die sich aus der Herstellung ergeben,
- Verschweißen der Längsränder (3) des Blechs (1) miteinander mittels des Verfahrens zum Schweißen gemäß einem der Ansprüche 13 und 14, um den Rohrabschnitt (5) auszubilden.

**16.** Verfahren zum Herstellen eines Rohrabschnitts gemäß Anspruch 15, wobei das zwischen den Längsrändern (3) des Blechs (1) zum Ausbilden des Rohrabschnitts (5) durchgeführte Schweißen ein Längsstumpfschweißen ist.

**17.** Verfahren zum Herstellen eines Rohres (7), aufweisend die folgenden aufeinanderfolgenden Schritte:

- Bereitstellen eines ersten Rohrabschnitts (5) und eines zweiten Rohrabschnitts (5), die sich jeweils entlang einer Längsachse (M) erstrecken und aus einem Basismetall gebildet sind, das in Gew.-% aufweist:

$35,0\% \leq Ni \leq 37,0\%$
$Spuren \leq C \leq 0,10\%$
$Spuren \leq Mn \leq 0,60\%$
$Spuren \leq P \leq 0,025\%$
$Spuren \leq S \leq 0,025\%$
$Spuren \leq Si \leq 0,35\%$
$Spuren \leq Cr \leq 0,50\%$
$Spuren \leq Mo \leq 0,50\%$
$Spuren \leq Co \leq 0,50\%$

wobei der Rest aus Eisen und aus unvermeidbaren Verunreinigungen gebildet ist, die sich aus der Herstellung ergeben,
- Positionieren des ersten und des zweiten Rohrabschnitts (5) derart, dass ein Längsende (10) des ersten Rohrabschnitts (5) entlang der Längsachse (M) des ersten und des zweiten Rohrabschnitts (5) gegenüber einem Längsende (10) des zweiten Rohrabschnitts (5) angeordnet ist, und
- Verschweißen von zwei einander gegenüberliegenden Längsenden (10) des ersten und des zweiten Rohrabschnitts (5) miteinander mittels des Verfahrens zum Schweißen gemäß einem der Ansprüche 13 und 14, um das Rohr (7) auszubilden.

**18.** Verfahren zum Herstellen eines Rohres (7) gemäß Anspruch 17, wobei das Verschweißen der einander gegenüberliegenden Längsenden (10) des ersten und des zweiten Rohrabschnitts (5) ein Kreisstumpfschweißen oder ein Orbitalstumpfschweißen ist.

**19.** Verfahren zum Herstellen eines Teils eines Gefäßes, das vorgesehen ist, um eine kryogene Flüssigkeit aufzunehmen, aufweisend die folgenden Schritte:

- Bereitstellen von gegebenenfalls geformten Stücken, die jeweils aus einem Basismetall gebildet sind, das in Gew.-% aufweist:

35,0% ≤ Ni ≤ 37,0%
Spuren ≤ C ≤ 0,10%
Spuren ≤ Mn ≤ 0,60%
Spuren ≤ P ≤ 0,025%
Spuren ≤ S ≤ 0,025%
Spuren ≤ Si ≤ 0,35%
Spuren ≤ Cr ≤ 0,50%
Spuren ≤ Mo ≤ 0,50%
Spuren ≤ Co ≤ 0,50%

wobei der Rest aus Eisen und aus unvermeidbaren Verunreinigungen gebildet ist, die sich aus der Herstellung ergeben, und

- Verschweißen dieser beiden Teile von Stücken (12) miteinander mittels des Verfahrens zum Schweißen gemäß einem der Ansprüche 13 und 14, um den Gefäßteil auszubilden.

20. Schweißverbindung (10), aufweisend einen ersten Teil eines Stücks (12) und einen zweiten Teil eines Stücks (12), die jeweils aus einem Basismetall gebildet sind, das in Gew.-% aufweist:

35,0% ≤ Ni ≤ 37,0%
Spuren ≤ C ≤ 0,10%
Spuren ≤ Mn ≤ 0,60%
Spuren ≤ P ≤ 0,025%
Spuren ≤ S ≤ 0,025%
Spuren ≤ Si ≤ 0,35%
Spuren ≤ Cr ≤ 0,50%
Spuren ≤ Mo ≤ 0,50%
Spuren ≤ Co ≤ 0,50%

wobei der Rest aus Eisen und aus unvermeidbaren Verunreinigungen gebildet ist, die sich aus der Herstellung ergeben, wobei der erste und der zweite Teil von Stücken (12) durch eine Schweißnaht (13) miteinander verbunden sind, die aus dem Schweißdraht gemäß einem der Ansprüche 1 bis 7 erhalten wird.

21. Gefäßteil, aufweisend Stücke, die aus einem Basismetall hergestellt sind, das in Gew.-% aufweist:

35,0% ≤ Ni ≤ 37,0%
Spuren ≤ C ≤ 0,10%
Spuren ≤ Mn ≤ 0,60%
Spuren ≤ P ≤ 0,025%
Spuren ≤ S ≤ 0,025%
Spuren ≤ Si ≤ 0,35%
Spuren ≤ Cr ≤ 0,50%
Spuren ≤ Mo ≤ 0,50%
Spuren ≤ Co ≤ 0,50%

wobei der Rest aus Eisen und aus unvermeidbaren Verunreinigungen gebildet ist, die sich aus der Herstellung ergeben, die durch Schweißnähte miteinander verbunden sind, die aus dem Schweißdraht gemäß irgendeinem der Ansprüche 1 bis 7 erhalten werden.

22. Rohrabschnitt (5), aufweisend ein Blech (1), das in Rohrform umgeschlagen ist und aus einem Basismetall hergestellt ist, das in Gew.-% aufweist:

35,0% ≤ Ni ≤ 37,0%
Spuren ≤ C ≤ 0,10%
Spuren ≤ Mn ≤ 0,60%
Spuren ≤ P ≤ 0,025%
Spuren ≤ S ≤ 0,025%

Spuren $\leq$ Si $\leq$ 0,35%
Spuren $\leq$ Cr $\leq$ 0,50%
Spuren $\leq$ Mo $\leq$ 0,50%
Spuren $\leq$ Co $\leq$ 0,50%

wobei der Rest aus Eisen und aus unvermeidbaren Verunreinigungen gebildet ist, die sich aus der Herstellung ergeben, und aufweisend Längsränder (3), die durch eine Schweißnaht (6) miteinander verbunden sind, die aus dem Schweißdraht gemäß irgendeinem der Ansprüche 1 bis 7 erhalten wird.

23. Rohr (7), aufweisend mindestens zwei Rohrabschnitte (5), die jeweils aus einem Basismetall hergestellt sind, das in Gew.-% aufweist:

35,0% $\leq$ Ni $\leq$ 37,0%
Spuren $\leq$ C $\leq$ 0,10%
Spuren $\leq$ Mn $\leq$ 0,60%
Spuren $\leq$ P $\leq$ 0,025%
Spuren $\leq$ S $\leq$ 0,025%
Spuren $\leq$ Si $\leq$ 0,35%
Spuren $\leq$ Cr $\leq$ 0,50%
Spuren $\leq$ Mo $\leq$ 0,50%
Spuren $\leq$ Co $\leq$ 0,50%

wobei der Rest aus Eisen und aus unvermeidbaren Verunreinigungen gebildet ist, die sich aus der Herstellung ergeben,
wobei zwei aufeinanderfolgende Rohrabschnitte (5) durch eine Schweißnaht (11) miteinander verbunden sind, die aus dem Schweißdraht gemäß irgendeinem der Ansprüche 1 bis 7 erhalten wird.

## Claims

1. Welding wire intended to be used for welding together portions of parts, which portions have the following composition in wt. %:

35.0% $\leq$ Ni $\leq$37.0%
trace $\leq$ C $\leq$ 0.10%
trace $\leq$ Mn $\leq$ 0.60%
trace $\leq$ P $\leq$ 0.025%
trace $\leq$ S $\leq$ 0.025%
trace $\leq$ Si $\leq$ 0.35%
trace $\leq$ Cr $\leq$ 0.50%
trace $\leq$ Mo $\leq$ 0.50%
trace $\leq$ Co $\leq$ 0.50%

the rest consisting of iron and inevitable impurities resulting from production,
**characterised in that** it is made in an alloy comprising, in wt. %:

38.6% $\leq$ Ni+Co $\leq$ 45.0%
trace $\leq$ Co $\leq$ 0.50%
2.25% $\leq$ Ti+Nb $\leq$ 0.8667 x (Ni+Co) - 31.20 % if 38.6% $\leq$ Ni+Co $\leq$ 40.33%
2.25% $\leq$ Ti+Nb $\leq$ 3.75% if 40.33% $\leq$ Ni+Co $\leq$ 41.4%
0.4167 x (Ni+Co) -15.0 % $\leq$ Ti+Nb $\leq$ 3.75% if 41.4% $\leq$ Ni+Co $\leq$ 45.0%
trace $\leq$ Nb $\leq$ 0.50%
0.01% $\leq$ Mn $\leq$ 0.30%
0.01% $\leq$ Si $\leq$ 0.25%
trace $\leq$ C $\leq$ 0.05%
trace $\leq$ Cr $\leq$ 0.50%

the rest consisting of iron and inevitable impurities resulting from production.

2. Welding wire according to claim 1, wherein the niobium content of the welding wire is less than or equal to 0.01 wt. %.

3. Welding wire according to claim 1 or 2, wherein the cobalt content of the welding wire is less than or equal to 0.10 wt. %.

4. Welding wire according to any of claims 1 to 3, wherein the carbon content of the welding wire is less than or equal to 0.015 wt. %.

5. Welding wire according to any of the foregoing claims, made in an alloy comprising, in wt. %:

    $40.0\% \leq Ni+Co \leq 42.0\%$
    $2.60\% \leq Ti + Nb \leq 3.40\%$
    $trace \leq Nb \leq 0.01\%$
    $trace \leq Co \leq 0.10\%$
    $0.01\% \leq Mn \leq 0.10\%$
    $0.01\% \leq Si \leq 0.10\%$
    $trace \leq C \leq 0.015\%$
    $trace \leq Cr \leq 0.10\%$

    the rest consisting of iron and inevitable impurities resulting from production.

6. Welding wire according to any of the foregoing claims, made in an alloy comprising, in wt. %:

    $41.0\% \leq Ni+Co \leq 42.0\%$
    $2.60\% \leq Ti + Nb \leq 3.40\%$
    $trace \leq Nb \leq 0.01\%$
    $trace \leq Co \leq 0.10\%$
    $0.01\% \leq Mn \leq 0.10\%$
    $0.01\% \leq Si \leq 0.10\%$
    $trace \leq C \leq 0.015\%$
    $trace \leq Cr \leq 0.10\%$

    the rest consisting of iron and inevitable impurities resulting from production.

7. Welding wire according to any of the foregoing claims, the diameter of which is comprised between 0.5 mm and 1.5 mm, preferably between 0.8 mm and 1.2 mm.

8. Method for producing a welding wire according to any of claims 1 to 7, comprising the following steps:

    - provision of a semi-finished product made of an alloy having the composition of the welding wire according to any of claims 1 to 7;
    - hot transformation of the semi-finished product to form a wire; and
    - transformation of the wire into a welding wire having a diameter smaller than that of the wire, said transformation comprising a drawing step.

9. Method of production according to claim 8, in which the transformation of the wire into a welding wire comprises the descaling of the wire and the winding of the descaled wire into a coil, whereby the drawing step consists in drawing the descaled wire wound into a coil.

10. Method of production according to any of claims 8 or 9, wherein the semi-finished product is a billet or an ingot.

11. Method of production according to any of claims 8 to 10, wherein the wire has a diameter comprised between 5 and 21 mm, in particular approximately equal to 5.5 mm.

12. Method of production according to any of claims 8 to 11, wherein the hot transformation of the semi-finished product to form the wire comprises the hot rolling of the semi-finished product to reduce its cross-section and the hot rolling of the semi-finished product having a reduced section to form the wire.

13. Method for welding together at least two portions of parts (12), which portions have the following composition in wt. %:

35.0% ≤ Ni ≤37.0%
trace ≤ C ≤ 0.10%
trace ≤ Mn ≤ 0.60%
trace ≤ P ≤ 0.025%
trace ≤ S ≤ 0.025%
trace ≤ Si ≤ 0.35%
trace ≤ Cr ≤ 0.50%
trace ≤ Mo ≤ 0.50%
trace ≤ Co ≤ 0.50%

the rest consisting of iron and inevitable impurities resulting from production, comprising the following successive steps:

- providing a welding wire according to any of claims 1 to 7, and
- welding together the two portions of parts (12) using the welding wire as a filler wire.

14. Welding method according to claim 13, in which all welding passes are carried out using the welding wire according to claims 1 to 7 as a filler wire.

15. Method for producing a pipe section (5), comprising the following steps:

- providing a sheet (1) having two longitudinal ends (3) and made of a base metal comprising, in wt. %:

35.0% ≤ Ni ≤37.0%
trace ≤ C ≤ 0.10%
trace ≤ Mn ≤ 0.60%
trace ≤ P ≤ 0.025%
trace ≤ S ≤ 0.025%
trace ≤ Si ≤ 0.35%
trace ≤ Cr ≤ 0.50%
trace ≤ Mo ≤ 0.50%
trace ≤ Co ≤ 0.50%

the rest consisting of iron and inevitable impurities resulting from production; and
- welding together the longitudinal ends (3) of the sheet (1) using the welding method according to one of claims 13 and 14 to form the pipe section (5).

16. Method for producing a pipe section according to claim 15, wherein the weld between the longitudinal ends (3) of the sheet (1) to form the pipe section (5) is a longitudinal butt weld.

17. Method for producing a pipe (7), comprising the following successive steps:

- providing a first pipe section (5) and a second pipe section (5), each extending along a longitudinal axis (M), and made of a base metal comprising, in wt. %:

35.0% ≤ Ni ≤37.0%
trace ≤ C ≤ 0.10%
trace ≤ Mn ≤ 0.60%
trace ≤ P ≤ 0.025%
trace ≤ S ≤ 0.025%
trace ≤ Si ≤ 0.35%
trace ≤ Cr ≤ 0.50%
trace ≤ Mo ≤ 0.50%
trace ≤ Co ≤ 0.50%

the rest consisting of iron and inevitable impurities resulting from production;
- positioning the first and second pipe sections (5) such that a longitudinal end (10) of the first pipe section (5) is arranged facing a longitudinal end (10) of the second pipe section (5) along the longitudinal axis (M) of the first and second pipe section (5); and
- welding together two longitudinal ends (10) of the first and second pipe sections (5) using the welding method according to one of claims 13 and 14 to form the pipe (7).

**18.** Method for producing a pipe (7) according to claim 17, wherein the weld between the longitudinal ends (10) of the first and second pipe sections (5) is a circular butt weld or an orbital butt weld.

**19.** Method for producing a portion of a tank intended to contain a cryogenic liquid, comprising the following steps:

- providing parts, which may be formed into a shape, each made of a base metal comprising, in wt. %:

$35.0\% \leq Ni \leq 37.0\%$
$trace \leq C \leq 0.10\%$
$trace \leq Mn \leq 0.60\%$
$trace \leq P \leq 0.025\%$
$trace \leq S \leq 0.025\%$
$trace \leq Si \leq 0.35\%$
$trace \leq Cr \leq 0.50\%$
$trace \leq Mo \leq 0.50\%$
$trace \leq Co \leq 0.50\%$

the rest consisting of iron and inevitable impurities resulting from production; and
- welding together these parts (12) using the welding method according to one of claims 13 and 14 to form the tank portion.

**20.** Welded assembly (10) comprising a first portion of a part (12) and a second portion of a part (12), each made of a base metal comprising, in wt. %:

$35.0\% \leq Ni \leq 37.0\%$
$trace \leq C \leq 0.10\%$
$trace \leq Mn \leq 0.60\%$
$trace \leq P \leq 0.025\%$
$trace \leq S \leq 0.025\%$
$trace \leq Si \leq 0.35\%$
$trace \leq Cr \leq 0.50\%$
$trace \leq Mo \leq 0.50\%$
$trace \leq Co \leq 0.50\%$

the rest consisting of iron and inevitable impurities resulting from production, wherein the first and second portions of parts (12) are connected by a weld bead (13) obtained from the welding wire according to any of claims 1 to 7.

**21.** Portion of a tank comprising parts made of a base metal comprising, in wt. %:

$35.0\% \leq Ni \leq 37.0\%$
$trace \leq C \leq 0.10\%$
$trace \leq Mn \leq 0.60\%$
$trace \leq P \leq 0.025\%$
$trace \leq S \leq 0.025\%$
$trace \leq Si \leq 0.35\%$
$trace \leq Cr \leq 0.50\%$
$trace \leq Mo \leq 0.50\%$
$trace \leq Co \leq 0.50\%$

the rest consisting of iron and inevitable impurities from production, connected by weld beads obtained from the welding wire according to any of claims 1 to 7.

**22.** Pipe section (5) comprising a sheet (1) folded in the shape of a tube and made of a base metal comprising, in wt. %:

35.0% ≤ Ni ≤37.0%
trace ≤ C ≤ 0.10%
trace ≤ Mn ≤ 0.60%
trace ≤ P ≤ 0.025%
trace ≤ S ≤ 0.025%
trace ≤ Si ≤ 0.35%
trace ≤ Cr ≤ 0.50%
trace ≤ Mo ≤ 0.50%
trace ≤ Co ≤ 0.50%

the rest consisting of iron and inevitable impurities resulting from production, and having longitudinal edges (3) connected by a weld bead (6) obtained from the welding wire according to any of claims 1 to 7.

23. Pipe (7) comprising at least two pipe sections (5), each made of a base metal comprising, in wt. %:

35.0% ≤ Ni ≤37.0%
trace ≤ C ≤ 0.10%
trace ≤ Mn ≤ 0.60%
trace ≤ P ≤ 0.025%
trace ≤ S ≤ 0.025%
trace ≤ Si ≤ 0.35%
trace ≤ Cr ≤ 0.50%
trace ≤ Mo ≤ 0.50%
trace ≤ Co ≤ 0.50%

the rest consisting of iron and inevitable impurities resulting from production,
two successive pipe sections (5) being connected by a weld bead (11) obtained from the welding wire according to any of claims 1 to 7.

## FIG.1

## FIG.2

## FIG.3

## FIG.4

## FIG.5

**EP 2 951 328 B1**

**RÉFÉRENCES CITÉES DANS LA DESCRIPTION**

**Documents brevets cités dans la description**

- FR 1363453